# EUROPÄISCHE PATENTSCHRIFT

(11) **EP 0 516 995 B1**
(45) Veröffentlichungstag und Bekanntmachung des Hinweises auf die Patenterteilung: **05.03.1997**
(21) Anmeldenummer: 92107744.2
(22) Anmeldetag: 08.05.1992
(51) Int. Cl.: F01K 23/10

(54) **Kombinierte Gas/Dampf-Kraftwerkanlage**
Combined gas-steam power plant
Centrale combinée à gaz et à vapeur

(30) Priorität: 01.06.1991 DE 4118062
(43) Veröffentlichungstag der Anmeldung: 09.12.1992
(73) Patentinhaber: ASEA BROWN BOVERI AG, 5401 Baden (CH)
(72) Erfinder: Frutschi, Hans Ulrich, CH-5223 Riniken (CH); Häusermann, Alfred, CH-5415 Rieden (CH); Wettstein, Hans, Dr., CH-5442 Fislisbach (CH)

(56) Entgegenhaltungen:
- EP-A- 0 247 984
- FR-A- 1 060 268
- GB-A- 2 232 721

## Beschreibung

### Technisches Gebiet

Die vorliegende Erfindung betrifft eine kombinierte Gas/Dampf-Kraftwerksanlage gemäss Oberbegriff des Anspruchs 1.

### Stand der Technik

Unter dem Begriff "kombinierte Gas/Dampf-Kraftwerksanlage" -im folgenden kurz Kombikraftwerk genannt- ist immer das Zusammenwirken mindestens einer Gasturbogruppe mit mindestens einem Dampfturbinenkreislauf zu verstehen, wobei die Abgase aus dem Betrieb der Gasturbogruppe durch einen Abhitzedampferzeuger (= Abhitzekessel) geleitet werden, in welchem das Restwärmepotential dieser Abgase zur Erzeugung des für die Beaufschlagung der Dampfturbine benötigten Dampfes herangezogen wird. Diese zusätzliche Dampfleistung führt zu einem höheren thermischen Wirkungsgrad der Anlage. Diese Kombikraftwerke weisen sich daher durch sehr gute Konversionswirkungsgrade aus, die sich in der Grössenordnung von ca. 50-55% bewegen. Eine Möglichkeit, den Wirkungsgrad dieser Anlage signifikant zu erhöhen, kann über eine Erhöhung der Heissgastemperatur erfolgen. Indessen, damit handelt man sich andere Nachteile ein, die sich auf den Wirkungsgrad der Anlage und auf die Wirtschaftlichkeit des produzierten Stromes, d.h. auf die spezifischen Kosten der Anlage, kontraproduktiv auswirken. So ist darauf hinzuweisen, dass mit der Bereitstellung eines Heissgases mit einer Temperatur von über 1400°C unweigerlich in einen Bereich vorgestossen wird, in welchem die NOx-Emissionen aus dieser Verbrennung sprunghaft ansteigen, was wiederum Massnahmen, beispielsweise Wasser- oder Dampfeinspritzung, notwendig macht, welche die aus der Temperaturerhöhung theoretisch zu erwartende Wirkungsgradverbesserung wieder weitgehend vernichten, so dass der diesbezügliche Wirkungsgradgewinn in keiner Relation zum hierfür betriebenen Aufwand steht, abgesehen davon, dass mit jeder Temperaturerhöhung teuere Anpassungen bezüglich hochwertiger Materialien und teuere Vorkehrungen für die Kühlung, insbesondere betreffend die Schaufeln, notwendig sind.

Aus FR-A-1 060 268 ist eine kombinierte Gas/Dampf-Kraftwerksanlage bekanntgeworden, welche im wesentlichen aus einer fossil befeuerten Gasturbogruppe, aus einem Dampfkreislauf und aus einem der Gasturbogruppe nachgeschalteten Abhitzekessel besteht. Die Gasturbogruppe selbst besteht aus mindestens zwei Verdichtern und mindestens zwei Turbinen, wobei der Abhitzekessel von den Abgasen dieser Gasturbogruppe durchströmt wird. Stromab des ersten Verdichters ist ein Zwischenkühler angordnet, und kühlseitiq dieses Zwischenkühlers wirkt ein mit diesem in Wirkverbindung stehender Verdampfer. Eine Dampfmenge aus diesem Verdampfer wird in den Dampfkreislauf eingeleitet. Die ganze Wärme aus dem Zwischenkühler wird mittelbar über eine relativ grosse Verdampferfläche zu Dampf umgewandelt, wobei bei einer solchen Schaltung die Zwischenkühlung mit einem Economizer erweitert werden muss. Ein Verdampfer zur unmittelbaren Ausdampfung des vom Zwischenkühler kommenden Kühlwassers ist hier nicht vorhanden.

### Darstellung der Erfindung

Der Erfindung, wie sie in den Ansprüchen gekennzeichnet ist, liegt die Aufgabe zugrunde, bei einer kombinierten Gas/Dampf-Kraftwerksanlage der eingangs genannten Art den Wirkungsgrad der Anlage zu steigern, ohne die Temperatur der Heissgase zu erhöhen.

Diese Aufgabe wird mit den Merkmalen des Anspruchs 1 gelöst.

Der wesentlichen Vorteil der Erfindung ist darin zu sehen, dass bei reduzierten spezifischen Kosten der Anlage der Wirkungsgrad des erfindungsgemässen Kombikraftwerkes bei einer Mischtemperatur von 1200°C vor der Gasturbine auf ca. 60% erhöht werden kann. Dies wird erreicht, indem der Verdichter zum einen mit einem Zwischenkühler ergänzt wird, der eine Erhöhung der spezifischen Leistung mit sich bringt. Dies hätte eine signifikante Abnahme des Wirkungsgrades des Kombikraftwerkes zur Folge. Diese negative Auswirkung wird aber durch die erfinderische Schaltung aufgehoben, indem die Wärme aus dem Zwischenkühler nutzbar gemacht wird, dergestalt, dass Druckwasser erzeugt wird, welches im Verdampfer zum Teil in Dampf umgewandelt wird, dieser dann an passender Stelle in die Dampfturbine eingeleitet wird, wobei dieser Dampf am Kombiwirkungsgrad, je nach Druckverhältnis, mit 2-4 Punkten partizipiert. Zum anderen wird eine zusätzliche Massnahme vorgekehrt, welche für eine zusätzliche Wirkungsgraderhöhung sorgt, indem die verdichtete Luft zunächst, wie üblich, in einer Brennkammer von etwa 300°C auf ca. 1350°C aufgeheizt wird, bevor sie in einer Hochdruckturbine entspannt wird. Bei diesem Vorgang wird die Temperatur von einem Mischwert von 1200°C auf etwa 1000°C abgebaut. Anschliessend wird sie dann nochmals auf ca. 1400°C zwischenüberhitzt, dergestalt, dass sich in der nachfolgenden Niederdruckturbine auch eine mittlere Turbineneintrittstemperatur von 1200°C einstellen wird. Dies führt dazu, dass die dem Abhitzekessel zuströmenden Rauchgase ca. 600°C aufweisen werden. Durch die Interdependenz dieser beiden Massnahmen kann der Wirkungsgrad der Kombianlage in umschriebenem Masse maximiert werden.

Vorteilhafte und zweckmässige Weiterbildungen der erfindungsgemässen Aufgabenlösung sind in den abhängigen Ansprüchen kennzeichnet.

Im folgenden werden anhand der Zeichnungen Ausführungsbeispiele der Erfindung näher erläutert. Alle für das unmittelbare Verständnis der Erfindung nicht erforderlichen Elemente sind fortgelassen. Die Strömungsrichtung der Medien ist mit Pfeilen angegeben. In den verschiedenen Figuren sind gleiche Elemente jeweils mit den gleichen Bezugszeichen versehen.

### Kurze Beschreibung der Zeichnungen

Es zeigen:
- Fig. 1: ein Kreislaufschema einer Kombikraftwerkes mit schenüberhitzung und Zwischenkühlung und
- Fig. 2: eine zweiwellige koaxiale Anordnung einer Gasturbine mit Zwischenüberhitzung und Zwischenkühlung.

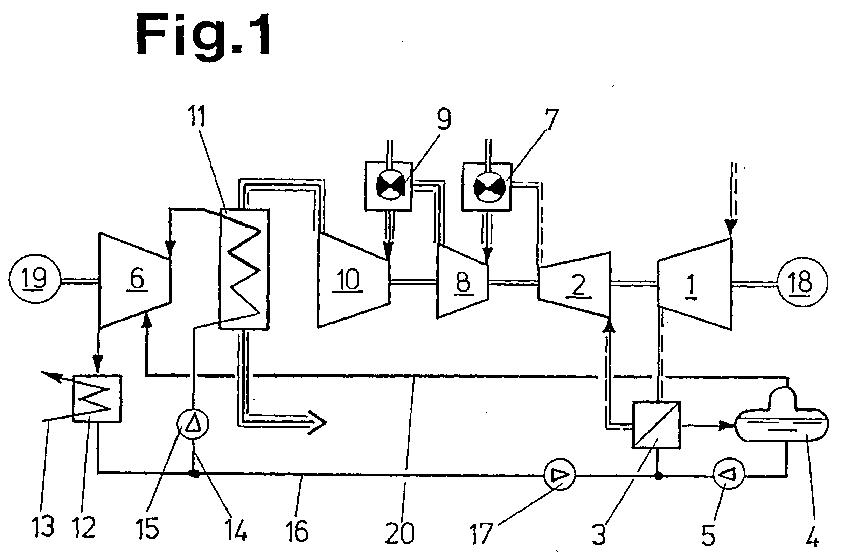

Wege zur Ausführung der Erfindung, gewerbliche Anwendbarkeit Fig. 1 zeigt ein Kreislaufschema eines Kombikraftwerkes mit einer Zwischenkühlung und Zwischenüberhitzung. Die Verdichterstufe bei diesem Kombikraftwerk ist in zwei Teilverdichter 1 und 2 unterteilt. Zwischen diesen beiden Verdichtern 1, 2, also stromab des ersten Verdichters 1 und stromauf des zweiten Verdichters 2, ist ein Zwischenkühler 3 geschaltet, in welchem die teilverdichtete Luft zwischengekühlt wird. Die in diesem Zwischenkühler 3 aus dem genannten Zwischenkühlungsprozess erzeugte Heisswasser wird einem nachgeschalteten Verdampfer 4 zugeführt, der ein- oder mehrstufig sein kann. Hier geschieht eine Ausdampfung, und der so gewonnene Dampf 20 wird der Dapfturbine 6, stromab der Gasturbogruppe, an geeigneter Stelle zugeführt. Dieser Dampf partizipiert zunächst am Kombiwirkungsgrad mit 2 bis 4 Punkten, je nach Druckverhältnis. Die verdichtete Luft aus dem Verdichter 2 gelangt mit beispielsweise 45 bar in eine erste Heissgaserzeugungsanlage 7, die vorzugsweise eine Brennkammer ist, in welcher die Luft von etwa 350°C auf ca. 1350°C Heissgastemperatur aufgeheizt wird. Dieses Heissgas beaufschlagt anschliessend eine Hochdruckturbine 8, in welcher eine Entspannung des Gases von 45 bar auf ca. 14 bar stattfindet. Die Temperatur des Heissgases erfährt in dieser Hochdruckturbine 8 einen Abbau von einem Mischwert von 1200°C auf etwa 850°C. Die Abgase aus dieser Hochdruckturbine 8 werden dann in einer zweiten Heissgaserzeugungsanlage 9, die vorzugsweise eine Brennkammer ist, auf ca 1400°C aufgeheizt, um so eine gewogene mittlere Turbineneintrittstemperatur von 1200°C auch für eine dieser zweiten Brennkammer 9 nachgeschalteten Niederdruckturbine 10 zu erreichen. Sowohl die erste Brennkammer 7 als auch die zweite Brennkammer 9 sind mit einem flüssigen und/oder gasförmigen Brennstoff betreibbar. Die Kühlluftströme für die beiden Turbinen 8 und 10 betragen je etwa 10-15% und werden, in der Fig. 1 nicht ersichtlich, den Verdichtern 1, 2 an passenden Stellen entnommen. In der Niederdruckturbine 10 wird mit einem Druckverhältnis von ca. 14 entspannt, wobei die einem stromab der letztgenannten Turbine nachgeschalteten Abhitzekessel 11 zuströmenden Abgase ca. 600°C aufweisen. Dort wird Dampf in zwei Druckstufen erzeugt und anschliessend der nachgeschalteten Dampfturbine 6 zugeführt. Möglich ist auch der Einsatz eines Dreidruck-Abhitzekessels. Dieser Dampfturbine 6 ist ein Kondensator 12 nachgeschaltet, wobei hier als Kühlmedium 13 Wasser oder Luft zum Einsatz gelangen kann. Das Kondensat des Abdampfes aus der Dampfturbine 6 teilt sich sodann in zwei Teilströme auf. Der eine Teilstrom 14 wird über eine Förderpumpe 15 in den Abhitzekessel 11 geleitet; der andere Teilstrom 16 strömt über eine weitere Förderpumpe 17 durch den Zwischenkühler 3 und den Verdampfer 4. Im Zwischenkühler 3 wird die vom Verdichter 1 kommende Luft auf 70°C rückgekühlt, wobei sich das Wasser auf etwa 180-200°C erwähmt. Die Rückkühlung des Wassers seinerseits erolgt im Verdampfer 4 durch den Entzug der Verdampfungswärme. Der Verdampfer 4 kann auch als Entgaser verwendet werden. Sowohl die Gasturbogruppe als auch die Dampfturbine treiben je einen Generator 18, 19. Die zuletzt beschriebene Schaltung mit der zweiten Brennkammer 9, stromab der Hochdruckturbine 8 und stromauf der Niederdruckturbine 10, partizipiert ihrerseits am Kombiwirkungsgrad mit mindestens 5 Punkten, so dass ausgehend von einer Wirkungsgradausbeute eines zum Stand der Technik gehörenden Kombikraftwerkes von ca. 55%, unter Berücksichtigung der Wirkungsgradverbesserung aus der Einleitung des im Verdampfer 4 gewonnenen Dampfes 20 in der Dampfturbine 6, ein Wirkungsgrad bei der hier erläuterten Schaltung von mindestens 60% erzielt wird.

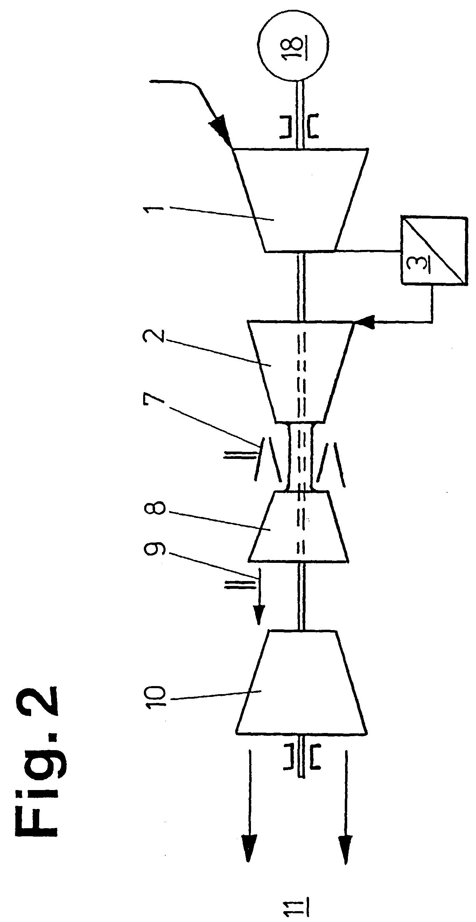

Was die Anordnung einer solchen Schaltung gemäss Fig. 1 anbelangt, so wird postuliert, dass wegen des grossen Druckverhältnisses von etwa 45 oder mehr eine Zweiwellengasturbine einzusetzen ist, weil die Volumenstromvariation während des Prozessablaufes sehr gross ist. Um ferner die Verdichteraustrittstemperatur im Rahmen zu halten, wird die bereits unter Fig. 1 beschriebene Zwischenkühlung der Verdichtung vorgesehen. Die ideale Anordnung bezüglich Fluidlogistik ist natürlich diejenige mit einer sogenannten "Core Engin", wie dies in Fig. 2 vorgeschlagen wird. Es handelt sich dabei um die zentrale Einfügung einer leistungsmässig ausgewogenen Gasturbogruppe mit Verdichter, Brennkammer 7 und Turbine 8.

Fig. 2 zeigt für die Gasturbogruppe grundsätzlich die gleiche Schaltung wie Fig. 1 in gleicher idealer Anordnung bezüglich Fluidlogistik. Dabei geht es bei dieser zweiwelligen koaxialen Anordnung in erster Linie darum, Heissgasleitungen stromab der ersten Brennkammer 7 und stromab der zweiten Brennkammer 9 zu eliminieren. Eine Lösung könnte darin bestehen, die Brennkamals Ringbrennkammmern auszubilden. Selbstverständlich gilt das Gesagte für beide Brennkammern, welche statt isobare auch isocore Brennkammern sein können, wobei bei den letztgenannten als Brennraum die einzelnen Zellen eines Zellenrad eingesetzt werden können.
Die erwähnte Einfügung einer leistungsmässig in sich ausgewogenen Gastubogruppe mit Verdichter 2, Brennkammer 7 und Turbine 8 bildet eine Einheit, deren Drehzahl von der Drehzahl der Niederdruckgruppe, mit Verdichter 1, Brennkammer 9 und Turbine 10, unabhängig ist, und in der Regel höher liegt, womit bei der ersten ohne weiteres von einer Druckerhöhungseinheit gesprochen werden kann. Die Niederdruckeinheit bildet demnach die Grundeinheit. Eine solche Konfiguration ist ideal für ein Baukastensystem. Die Grundeinheit kann auch für 50 Hz oder 60 Hz mit annähernd gleichem Massenstrom ausgelegt werden, wodurch das Baukastensystem maximal ausgedehnt werden kann.

Selbsverständlich ist technisch nicht ausgeschlossen, eine einwellige Anordnung vorzusehen. Indessen ist darauf hinzuweisen, dass mit einer solchen Anordnung 2-3 Wirkungsgradpunkte gegenüber einer im Druckverhältnis optimalen Anordnung geopfert werden. Hinsichtlich der spezifischen Leistung ist ein Rückgang von etwa 15% hinzunehmen. Dafür ergeben sich betriebliche Vorteile, wie ein einfaches Regel- und Sicherheitssystem. Das Teillastverhalten hinsichtlich Wirkungsgrad wird durch die Einwellenbauart nicht ernsthaft pönalisiert, denn durch Ansaugluftvorwärmung, eventuell verbunden mit einer Verdichter-Vorleitreihenverstellung, ergibt sich ein sehr gutes Teillast-Wirkungsgradverhalten. Des weiteren ist festzuhalten, dass als reine Gasturbine, also ohne nachgeschaltete Dampfturbine, eine Zwischenerhitzung punkto Wirkungsgrad nichts bringt. Im Gegenteil, ein Abfall ist hinzunehmen. Zwischenkühlung mit oder ohne Zwischenerhitzung verbessert jedoch bei grossen Druckverhältnissen den Wirkungsgrad im obengenannten Ausmass Die spezifische Leistung steigt aber auch schon allein mit Zwischüberhitzung um ca. 20%, mit Zwischenerhitzung und Zwischenkühlung sogar um ca. zwei Drittel.

## Patentansprüche

1. Kombinierte Gas/Dampf-Kraftwerksanlage, im wesentlichen bestehend aus mindestens einer fossil befeuerten Gasturbogruppe, mindestens einem Dampfkreislauf und mindestens einem der Gasturbogruppe nachgeschalteten Abhitzekessel (11), der von den Abgasen der Gasturbogruppe beaufschlagbar ist und eine Dampfmenge zum Betreiben einer Dampfturbine (6) im Dampfkreislauf bereitstellt, wobei die Gasturbogruppe mindestens zwei Turbinen (8, 10) aufweist, derart, dass zwischen diesen beiden Turbinen eine Zwischenüberhitzung (9) erfolgt, wobei die Gasturbogruppe mindestens zwei Verdichter (1, 2) aufweist und ein Zwischenkühler (3) zwischen diesen zwei Verdichtern angeordnet ist, und wobei der Zwischenkühler in Wirkverbindung mit einem Verdampfer (4) steht, dessen Dampfmenge (20) in die Dampfturbine einleitbar ist, dadurch gekennzeichnet, dass der Verdampfer (4) als Mischvorwärmer ausgebildet ist, in dem vom Zwischenkühler kommendes Kühlwasser ausgedampft wird.

2. Kombinierte Gas/Dampf-Kraftwerksanlage nach Anspruch 1, dadurch gekennzeichnet, dass die Gasturbogruppe zweiwellig ausgebildet ist.

3. Kombinierte Gas/Dampf-Kraftwerksanlage nach Anspruch 2, dadurch gekennzeichnet, dass auf einer Welle eine Niederdruck-Turbine (10) einen Niederdruck-Verdichter (1) und einen Generator (18) antreibt.

4. Kombinierte Gas/Dampf-Kraftwerksanlage nach Anspruch 3, dadurch gekennzeichnet, dass die von der Niederdruck-Turbine (10) angetriebene Einheit mit annähernd gleichem Massenstrom mit 50 Hz oder 60 Hz betreibbar ist.

5. Kombinierte Gas/Dampf-Kraftwerksanlage nach Anspruch 1, dadurch gekennzeichnet, dass die Brennkammern (7, 9) der Gasturbogruppe eine isochore oder isobare Verbrennung aufweisen.

## Claims

1. Combined gas/steam power station plant, consisting essentially of at least one fossil-fired gas turbine group, at least one steam circuit and at least one exhaust heat boiler (11), which is fitted downstream of the gas turbine group, to which exhaust gases from the gas turbine group can be admitted and which provides a steam quantity for operating a steam turbine (6) in the steam circuit, the gas turbine group having at least two turbines (8, 10), such that reheating (9) occurs between these two turbines, the gas turbine group having at least two compressors (1, 2), and an intercooler (3) being arranged between these two compressors, and the intercooler being in effective connection with an evaporator (4), the steam quantity (20) of which can be introduced into the steam turbine, characterized in that the evaporator (4) is designed as a mixing preheater in which cooling water coming from the intercooler is evaporated.

2. Combined gas/steam power station plant according to Claim 1, characterized in that the gas turbine group is of two-shaft design.

3. Combined gas/steam power station plant according to Claim 2, characterized in that the a low-pressure turbine (10) drives a low-pressure compressor (1) and a generator (18) on one shaft.

4. Combined gas/steam power station plant according to Claim 3, characterized in that the unit which is driven by the low-pressure turbine (10) can be operated at 50 Hz or 60 Hz with approximately the same mass flow.

5. Combined gas/steam power station plant according to Claim 1, characterized in that the combustion chambers (7, 9) of the gas turbine group exhibit constant volume or constant pressure combustion.

## Revendications

1. Centrale combinée à gaz et à vapeur, essentiellement composée d'au moins un turbogroupe à gaz à combustible fossile, d'au moins un circuit de vapeur et d'au moins une chaudière de récupération (11) placée après le turbogroupe à gaz, qui peut être alimentée avec les gaz d'échappement du turbogroupe à gaz et qui produit dans le circuit de vapeur un débit de vapeur pour entraîner une turbine à vapeur (6), dans laquelle le turbogroupe à gaz présente au moins deux turbines (8, 10), de telle façon qu'entre ces deux turbines se produise un réchauffage intermédiaire (9), dans laquelle le turbogroupe à gaz comprend au moins deux compresseurs (1, 2) et un refroidisseur intermédiaire (3) est disposé entre ces deux compresseurs, et dans laquelle le refroidisseur intermédiaire est en liaison active avec un évaporateur (4), dont le débit de vapeur (20) peut être introduit dans la turbine à vapeur, caractérisée en ce que l'évaporateur (4) est constitué par un réchauffeur à mélange, dans lequel l'eau froide provenant du refroidisseur intermédiaire est évaporée.

2. Centrale combinée à gaz et à vapeur suivant la revendication 1, caractérisée en ce que le turbogroupe à gaz est configuré avec deux arbres.

3. Centrale combinée à gaz et à vapeur suivant la revendication 2, caractérisée en ce qu'une turbine à basse pression (10) entraîne sur un arbre un compresseur à basse pression (1) et un générateur (18).

4. Centrale combinée à gaz et à vapeur suivant la revendication 3, caractérisée en ce que l'unité entraînée par la turbine à basse pression (10) peut fonctionner avec à peu près le même courant massique avec 50 Hz ou 60 Hz.

5. Centrale combinée à gaz et à vapeur suivant la revendication 1, caractérisée en ce que les chambres de combustion (7, 9) du turbogroupe à gaz présentent une combustion isochore ou isobare.
